# EUROPÄISCHE PATENTSCHRIFT

(11) **EP 2 281 439 B1**
(45) Veröffentlichungstag und Bekanntmachung des Hinweises auf die Patenterteilung: **28.03.2012**
(21) Anmeldenummer: 10168983.4
(22) Anmeldetag: 09.07.2010
(51) Int. Cl.: A01G 1/08, A01G 9/16, A01G 9/20, A01G 25/02

(54) **Hochbeet**
Raised bed
Plate-bande haute

(30) Priorität: 30.07.2009 AT 4862009 U
(43) Veröffentlichungstag der Anmeldung: 09.02.2011
(73) Patentinhaber: Buttazoni Gesellschaft m.b.H., 9562 Himmelberg (AT)
(72) Erfinder: Armin, Buttazoni, 9562, Himmelberg (AT)
(74) Vertreter: Sticht, Andreas

(56) Entgegenhaltungen:
- DE-A1- 2 850 028
- DE-A1- 3 247 462
- DE-A1- 10 042 897
- DE-U- 7 405 775
- DE-U- 7 424 287
- DE-U1-202004 007 559

## Beschreibung

Die Erfindung betrifft ein Hochbeet.

Hochbeete haben den Vorteil, dass die Pflanzen, insbesondere Gemüse und dgl., in einer Höhe von etwa 70 cm über dem Boden gepflanzt werden und wachsen, sodass man sich beim Pflegen des Beetes und der Pflanzen nicht mehr zu bücken braucht.

Überdies haben Hochbeete den Vorteil, dass es bei richtigem Anlegen des Hochbeetes zu einem Verrotten im unteren Bereich des Beetes kommt, was einerseits zu einer Erwärmung von unten und andererseits durch das Verrotten von eingefülltem Gras- oder Gartenschnitt zum Entstehen von Humus führt. Daher ist der Ertrag von Hochbeeten oft höher als von normalen Beeten.

Aus der DE 32 47 462 A1 ist ein Gewächshaus bekannt, welches einem Hochbeet gemäß dem Oberbegriff des Anspruchs 1 entspricht. Weitere entsprechende Pflanzbehälter und Hochbeete sind aus der DE 74 24 287 U, DE 28 50 028 A1, DE 7405775 U, DE 20 2004 007 559 U1 oder der DE 100 42 897 A1 bekannt.

Der Erfindung liegt die Aufgabe zu Grunde, ein Hochbeet zur Verfügung zu stellen, das einfach aufgebaut ist und leicht an dem gewünschten Ort aufgestellt werden kann.

Gelöst wird diese Aufgabe erfindungsgemäß mit einem Hochbeet, das die Merkmale von Anspruch 1 aufweist.

Bevorzugte und vorteilhafte Ausgestaltungen des Hochbeetes gemäß der Erfindung sind Gegenstand der Unteransprüche.

Erfindungsgemäß wird ein Hochbeet bereitgestellt, umfassend einen Rahmen mit lösbar an einem Gestell angebrachten Längsplatten und Querplatten, und eine Abdeckung aus lichtdurchlässigem Werkstoff. Die Längsplatten und die Querplatten können an Eckprofilleisten, welche Steher des Gestells bilden, angebracht sein. Die Längsplatten und die Querplatten können mit den Eckprofilleisten verschraubt sein. Die Längsplatten und die Querplatten können Lagen aus Isolierwerkstoff aufweisen. Insbesondere können die Längsplatten und die Querplatten Paneele mit Isolierlagen, insbesondere mit Lagen aus geschäumtem Kunststoff, sein, und/oder Sandwichpaneele sein.

Die Paneele der Längsplatten und der Querplatten können außen korrosionsgeschützte, insbesondere verzinkte, Stahlleichtbauteile aufweisen.

An den in Gebrauchslage oberen Rändern des Rahmens könne Profilleisten angeordnet sein.

Die Profilleisten können einen nach innen und nach oben offenen Falz aufweisen.

Oberhalb des Rahmens kann eine Berieselungsanlage vorgesehen sein. Die Berieselungsanlage kann ein mit Düsen bestücktes Rohr aufweisen. Die Berieselungsanlage kann sich parallel zu den Längsplatten erstrecken. Die Berieselungsanlage kann an den Querplatten befestigt sein.

Die Abdeckung besteht aus mehreren Platten und die Platten sind mit elastischen Schnüren am Rahmen gesichert.

Die Platten der Abdeckung können mit ihren Rändern in den Falz eingesetzt sein. Die Platten können gebogen sein. Die Schnüre können mit ihren Enden an den Platten festgelegt und mit ihrem Mittelteil über Vorsprünge, insbesondere Haken, eingehängt sein. Die Platten der Abdeckung können unter Vorspannung gewölbt sein.

Die Abdeckung kann aus durchsichtigem, insbesondere glasklarem, Werkstoff bestehen.

Wenigstens einzelne der Platten der Abdeckung können mit Abstand voneinander angeordnet sein.

Alternativ können wenigstens einzelne der Platten der Abdeckung einander überlappend angeordnet sein.

Die Abdeckung kann an einem oder beiden Querende(n) des Rahmens eine Abschlussplatte aufweisen.

Die Abschlussplatte kann mit ihrem unteren Rand im Falz der Profilleiste am oberen Rand der Querplatte aufstehen.

In dem in Gebrauchslage unteren Bereich des Rahmens kann ein Verband aus einander kreuzenden Leisten, die einander diagonal gegenüberliegende Steher miteinander verbinden, vorgesehen sein.

Der Rahmen kann ein Gestell aus als Steher dienenden Eckprofilleisten und horizontalen Profilleisten sowie mit diesen verbundene Längs- und Querplatten sein. Etwa in Längsmitte des Rahmens kann eine Abspannung bestehend aus wenigstens zwei quer zur Längserstreckung verlaufenden Bändern, insbesondere Flachmetall oder Profilstahl, vorgesehen sein.

Da das Hochbeet aus einem von Längsplatten und Querplatten gebildeten Rahmen gebildet ist, ergibt sich ein stabiler Grundkörper für das Hochbeet.

Durch die Abdeckung des Hochbeetes ergibt sich der zusätzliche Vorteil, dass das Hochbeet als Frühbeet verwendet werden kann, sodass sehr früh im Jahr mit der Bewirtschaftung begonnen werden kann. Zusätzlich schützt die Abdeckung vor Witterungseinflüssen, wie Hagel, Kälte und zu starkem Niederschlag.

Das Aufbauen des erfindungsgemäßen Hochbeetes ist besonders einfach, wenn der Rahmen ein Gestell aufweist, an dem die Längsplatten und Querplatten über Eckprofilleisten lösbar angebracht sind.

Ein zusätzlicher Schutz ergibt sich, wenn die Platten solche sind, die eine Lage aus Isolierwerkstoff aufweisen. Die Platten können Paneele mit geschäumten Lagen Isolierstoff ("Sandwichpaneele") sein.

In einer bevorzugten Ausführungsform bestehen die Paneele für das erfindungsgemäße Hochbeet aus zwei verzinkten, gekanteten und zum Teil geschweißten Stahlleichtbauteilen oder aus zwei verzinkten, beschichteten und gekanteten Bleichteilen, zwischen denen die isolierende Lage vorgesehen ist. Die Paneele können vom Benützer in Selbstmontage am Gestell befestigt (z.B. angeschraubt) werden.

Die am oberen Rand des Rahmens vorgesehenen Kantprofilleisten ("Einfassprofile"), die insbesondere Teile des Gestells des Rahmens sind, sind so ausgeführt, dass in die nach oben und innen offenen Falze der Kantprofilleisten die unteren Ränder der Abdeckung eingesetzt werden können.

Als Abdeckungen werden Platten aus lichtdurchlässigen, insbesondere durchsichtigen (glasklaren) und bruchfesten Werkstoffen, beispielsweise Platten aus den Polycarbonat-Werkstoffen mit den Markennamen Lexan oder Makrolon oder ähnlichen, verwendet. Diese zunächst ebenen Platten werden beim Anbringen am Hochbeet gebogen und unter leichter Spannung in die Falze in den oberen Kantprofilleisten ("Einfassprofile") eingesetzt. So erhalten die Platten der Abdeckung die gewünschte konvexe Form.

Die Abdeckungen bzw. die Platten derselben können durch Gummibänder in ihrer Lage fixiert werden, wobei die Gummibänder bevorzugt an Vorsprüngen an oberen Leisten des Gestells oder Seitenplatten (Längsplatten) des erfindungsgemäßen Hochbeetes bzw. dessen Rahmen eingehängt werden können.

Bei dem erfindungsgemäßen Hochbeet kann auch eine Berieselungsanlage vorgesehen sein, die beispielsweise ein längs laufendes Rohr umfasst, an dem eine mit Berieselungsdüsen versehene Leitung befestigt ist. Dieses Rohr kann über Träger an den Schmalseiten des Rahmens befestigt sein.

Um beim Zusammenbau die Form des Rahmens, die für gewöhnlich rechteckig ist, zu sichern, kann im Bodenbereich, also im Rahmen unten, sich kreuzend ein Verband vorgesehen sein.

Zusätzlich kann im Längsmittelbereich eine Abspannung vorgesehen sein, die ein Ausbauchen der Längsplatten unter dem Druck des Erdreiches verhindert. Diese Abspannungen bestehen aus zwei Kantwinkeln und aus von Metallleisten gebildeten Abspannstäben, wobei einer im Bodenbereich und der andere etwa in halber Höhe der Längsplatten vorgesehen ist, oder aus Metallabspannprofilen, wobei eines im Bodenbereich und ein anderes etwa in halber Höhe der Längsplatten vorgesehen ist.

Weitere Einzelheiten und Merkmale der Erfindung ergeben sich aus der nachstehenden Beschreibung eines bevorzugten Ausführungsbeispiels anhand der Zeichnungen.

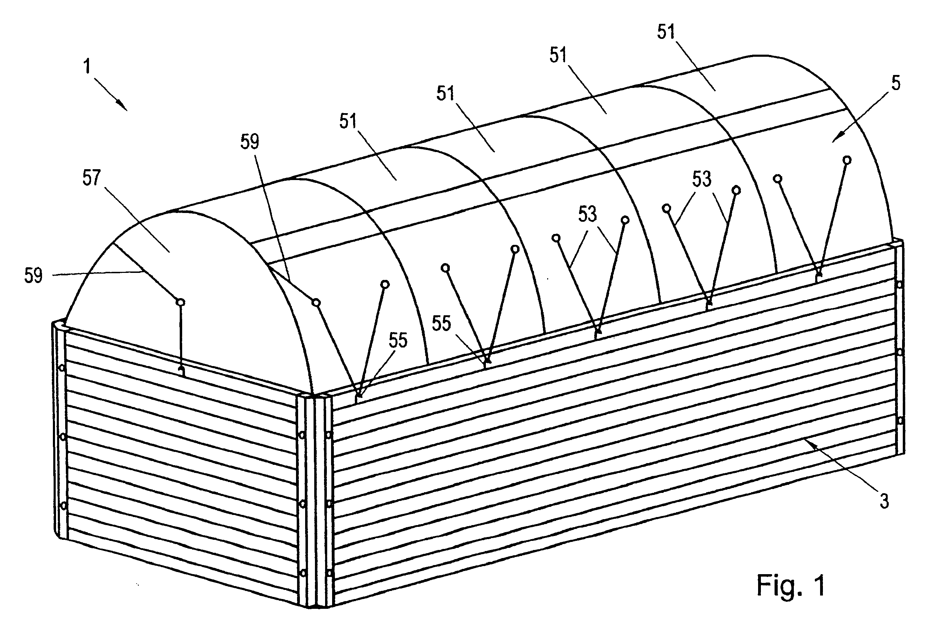

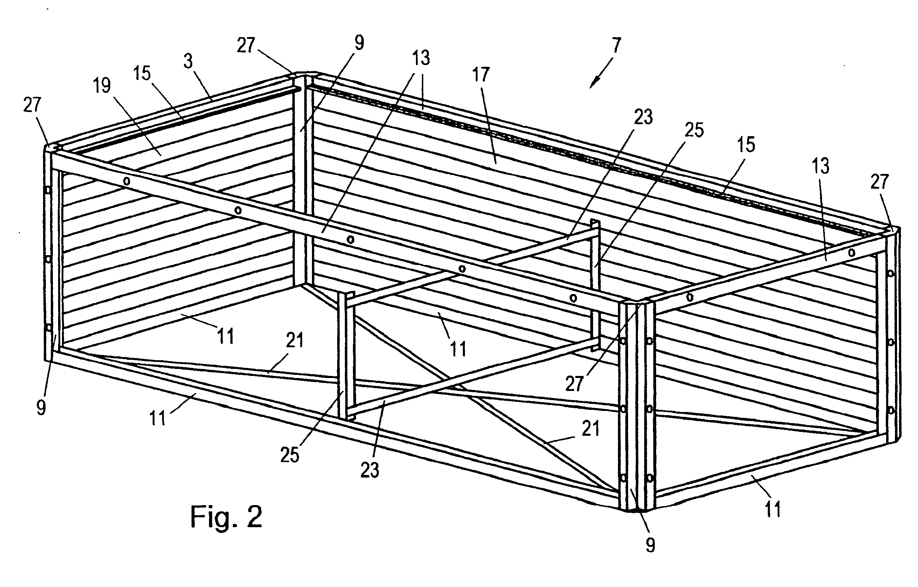

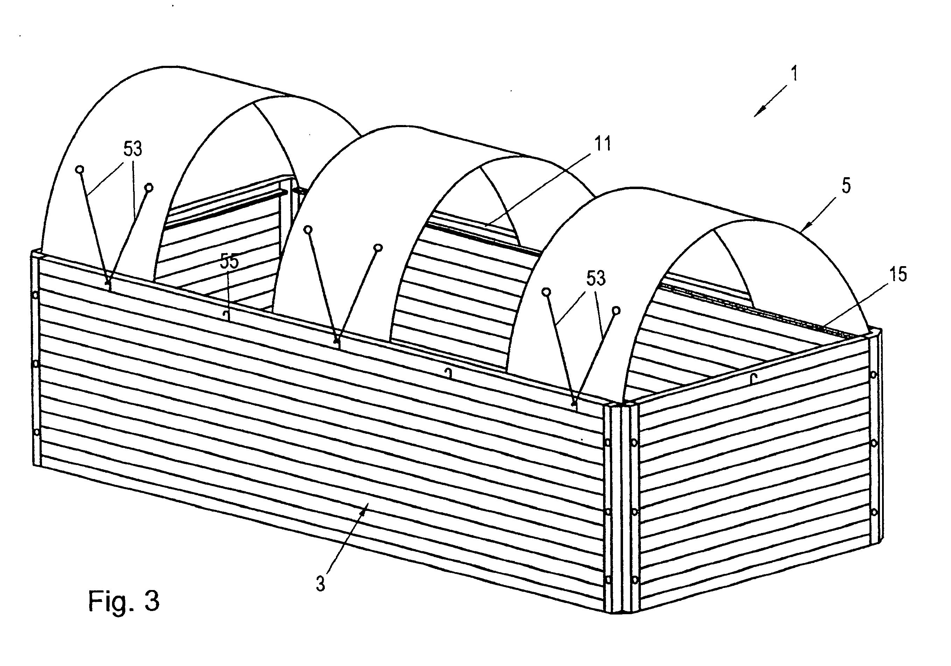

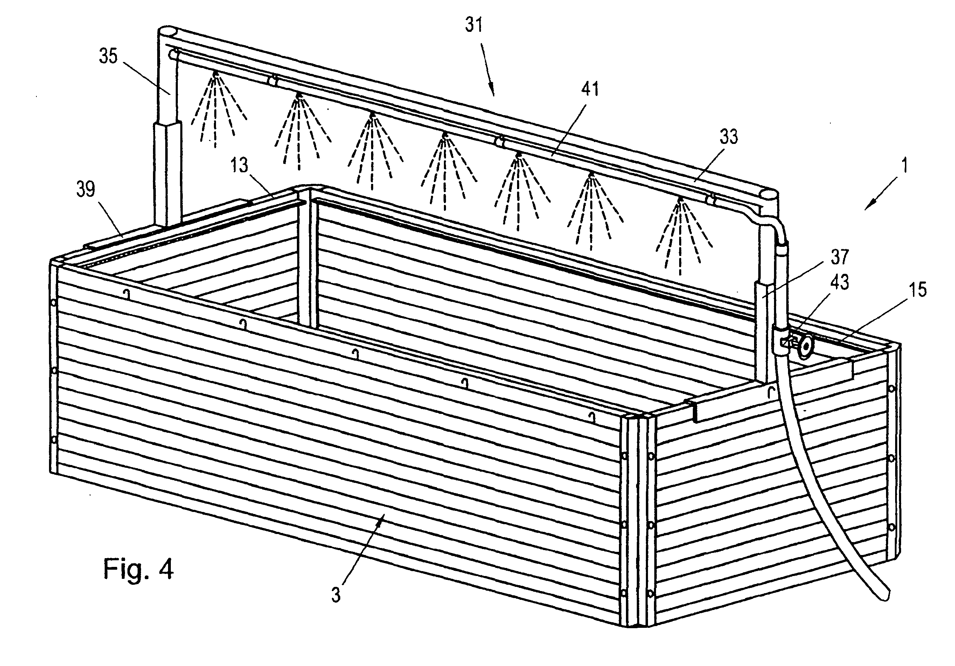

Es zeigt: Fig. 1 in Schrägansicht ein erfindungsgemäßes Hochbeet mit Abdeckung, Fig. 2 in Schrägansicht mit teilweise weggelassenen Teilen den Rahmen eines erfindungsgemäßen Hochbeetes, Fig. 3 in Schrägansicht eine andere Ausführungsform der Abdeckung eines erfindungsgemäßen Hochbeetes und die Fig. 4 das Hochbeet aus den Fig. 1 und 3 ohne Abdeckung mit Berieselungsanlage.

Ein erfindungsgemäßes Hochbeet 1 besteht aus einem am Boden aufgestellten Rahmen 3 und in den in den Fig. 1, 2 und 3 gezeigten Ausführungsbeispielen auch aus einer Abdeckung 5.

Der Rahmen 3 besteht aus einem Gestell 7, das aus Stehern 9 und U-Profilen 11 (die in Gebrauchslage unten liegen) zusammengesetzt ist. Die am oberen Rand des Gestells 7 des Rahmens 3 vorgesehenen Leisten 13 (Kantprofilleisten) dienen als Einfassprofile und weisen an ihrer Innenseite einen nach innen und oben hin offenen Falz 15 auf.

Der Rahmen 3 wird durch an dem Gestell 7 befestigte Platten vervollständigt. Im Einzelnen sind Längsplatten 17 und Querplatten 19 vorgesehen. Die Längsplatten 17 und die Querplatten 19 sind isolierende Paneele ("Sandwichpaneele") bestehend aus je zwei verzinkten und gekanteten Stahlleichtbauteilen, zwischen denen geschäumte Isolierstofflagen vorgesehen sind.

Zusätzlich weist der Rahmen 3 einen Kreuzverband 21 auf, der einander diagonal gegenüberliegende, untere Enden der Steher 9 des Gestells 7 miteinander verbindet, sodass ein Verziehen des Gestells 7 und damit des Rahmens 5 aus der rechteckigen Grundform verhindert wird.

Weiters ist etwa in der Längsmitte des Rahmens 3 eine Abspannung vorgesehen, die sich aus zwei Stehern 25 in Form von Kantwinkeln und dazwischen angeordneten, quer zur Längserstreckung des Rahmens 3 verlaufenden, Abspannungen 23 aus Flachmetall zusammensetzt. Dabei sind die Steher 25 mit den Längsplatten 17 des Rahmens 3 etwa in deren Längsmitte verschraubt.

Die Steher 9, die in den Ecken des Gestells 7 des erfindungsgemäßen Rahmens 3 vorgesehen sind, sind im Querschnitt (Draufsicht) mehrfach gekantet, sodass sie zueinander im Winkel stehende Aufnahmeräume bilden, welche die Längsplatten 17 und die Querplatten 19 (Stahlleichtbauteile mit Sandwichpaneelen) aufnehmen können. Im Wesentlichen sind die Steher 9 beispielsweise zwei miteinander verbundene Kantwinkel, sodass sich im Grundriss eine einem "W" ähnliche Form ergibt.

An den oberen Enden der Steher 9, die in den Ecken des Gestells 7 vorgesehen sind, können Abdeckbleche (Eckbleche) 27 vorgesehen sein.

Wie in Fig. 4 gezeigt, kann zur Vervollständigung des Hochbeetes 1 am Rahmen 3 eine Berieselungsanlage 31 angeordnet werden. In dem in Fig. 4 gezeigten Ausführungsbeispiel besteht die Berieselungsanlage 31 aus einem längs laufenden Trägerprofil 33, dessen nach unten abgewinkelte Enden 35 in Halterungen 37 eingesetzt sind. Die Halterungen 37 selbst werden über Schenkel 39 mit dem Einfassprofil 13 an den Schmalseiten des Rahmens 3 gehalten und befestigt. An dem längs laufenden Träger 33 ist eine Leitung 41 vorgesehen, in der Berieselungsdüsen für den Austritt von Berieselungswasser vorgesehen sind. Zusätzlich kann, wie in Fig. 4 gezeigt, die Zufuhr von Wasser durch ein Absperrorgan 43 geregelt werden.

Die Abdeckung 5 des erfindungsgemäßen Hochbeetes 1 besteht im gezeigten Ausführungsbeispiel aus mehreren Platten 51, die in Gebrauchslage eine gewölbte Form einnehmen. Dabei bestehen die Platten 51 aus lichtdurchlässigem, insbesondere glasklarem Werkstoff, wie beispielsweise Polycarbonat-Kunststoff (Makrolon oder Lexan).

Wie in den Zeichnungen gezeigt, sind die gebogenen Platten 51 der Abdeckung 5 in die nach innen und oben offenen Falze 15 an den Einfassprofilen 13 des Rahmens 3 des erfindungsgemäßen Hochbeetes 1 eingesetzt. Um zu verhindern, dass die Platten 51 der Abdeckung 5 unerwünscht aus ihrer Gebrauchslage gelangen, sind elastische Bänder 53 (z.B. Gummischnüre) vorgesehen. Diese elastischen Bänder 53 sind schlaufenförmig, wobei die Enden an den Platten 51 befestigt sind. Die Schlaufen 53 aus elastischem Werkstoff werden über hakenförmige Vorsprünge 55 an den Außenseiten der Einfassprofile 13 gehängt. So sind die Platten 51 der Abdeckung 5 am Rahmen 3 gesichert.

Für das Anbringen von Platten 51 der Abdeckung 5 gibt es zwei Möglichkeiten, wovon eine in Fig. 1 gezeigt ist, nämlich eine Ausführungsform mit einander überdeckenden/überlappenden Platten 51.

Eine andere Ausführungsform ist in Fig. 3 gezeigt, wo zwischen den einzelnen Platten 51 Freiräume vorgesehen sind.

Die Abdeckung kann bei Bedarf noch durch Endplatten 57 (Fig. 1) ergänzt werden, die an den Schmalseiten des erfindungsgemäßen Hochbeetes 1 vorgesehen sind. Dabei sind die Endplatten 57 so zugeschnitten, dass sie in ihrem oberen Bereich (obere, freie Ränder) im Wesentlichen der Krümmung der Platten 51 folgen. Das Festlegen der Endplatten 57 kann ebenfalls mit Hilfe von Gummischnüren 53 erfolgen, die in die Haken 55 der Platten 51, mit welchen diese am Rahmen 3 festgelegt sind, eingehängt sind.

Zusammenfassend kann ein Ausführungsbeispiel der Erfindung wie folgt beschrieben werden:
Ein Hochbeet 1 besteht aus einem Rahmen 3 mit einem Grundgestell 7, an dem isolierende Längs- und Querplatten 17, 19 befestigt sind. Die obere Einfassung 13 des Rahmens 3 weist an ihrer Innenseite einen Falz 15 auf, in den die seitlichen Ränder von gewölbten Abdeckplatten 51 eingesetzt sind. Zusätzlich sind die Abdeckplatten 51 durch elastische Schlaufen 55 an dem Rahmen 3 gesichert. Dem Hochbeet 1 kann eine Berieselungsanlage 31 zugeordnet sein, die sich in Richtung der Längserstreckung des Hochbeetes 1 erstreckt.

## Patentansprüche

1. Hochbeet (1), **gekennzeichnet durch** einen Rahmen (3) mit lösbar an einem Gestell (7) angebrachten Längsplatten (17) und Querplatten (19), und **durch** eine Abdeckung (5) aus lichtdurchlässigem Werkstoff, wobei die Abdeckung (5) aus mehreren Platten (51) besteht,
**dadurch gekennzeichnet, dass** die Platten (51) mit elastischen Schnüren (53) am Rahmen (3) gesichert sind.

2. Hochbeet nach Anspruch 1, **dadurch gekennzeichnet, dass** die Längsplatten (17) und die Querplatten (19) Paneele mit Isolierlagen, insbesondere mit Lagen aus geschäumtem Kunststoff, sind.

3. Hochbeet nach Anspruch 2, **dadurch gekennzeichnet, dass** die Längsplatten (17) und die Querplatten (19) Sandwichpaneele sind.

4. Hochbeet nach Anspruche 2 oder 3, **dadurch gekennzeichnet, dass** die Paneele der Längsplatten (17) und der Querplatten (19) außen korrosionsgeschützte, insbesondere verzinkte, Stahlleichtbauteile aufweisen.

5. Hochbeet nach einem der Ansprüche 1 bis 4, **dadurch gekennzeichnet, dass** an den in Gebrauchslage oberen Rändern des Rahmens (3) Profilleisten (13) angeordnet sind, wobei die Profilleisten (13) einen nach innen und nach oben offenen Falz (15) aufweisen.

6. Hochbeet nach Anspruch 5, **dadurch gekennzeichnet, dass** die Abdeckung (5) an einem oder beiden Querende(n) des Rahmens (3) eine Abschlussplatte (57) aufweist, wobei die Abschlussplatte (57) mit ihrem unteren Rand im Falz (15) der Profilleiste (13) am oberen Rand der Querplatte (19) aufsteht.

7. Hochbeet nach Anspruch 5 oder 6, **dadurch gekennzeichnet, dass** die Platten (51) der Abdeckung (5) mit ihren Rändern in den Falz (15) eingesetzt sind.

8. Hochbeet nach einem der vorherigen Ansprüche, **dadurch gekennzeichnet, dass** die zunächst ebenen Platten (51) an dem Hochbeet angebracht gebogen sind.

9. Hochbeet nach einem der Ansprüche 1 bis 8, **dadurch gekennzeichnet, dass** die Schnüre (53) mit ihren Enden an den Platten (51) festgelegt und mit ihrem Mittelteil über Vorsprünge (55), insbesondere Haken, eingehängt sind.

10. Hochbeet nach einem der Ansprüche 1bis 9, **dadurch gekennzeichnet, dass** die Platten (51) der Abdeckung (5) unter Vorspannung gewölbt sind.

11. Hochbeet nach einem der Ansprüche 1 bis 10, **dadurch gekennzeichnet, dass** wenigstens einzelne der Platten (51) der Abdeckung (5) mit Abstand voneinander angeordnet sind.

12. Hochbeet nach einem der Ansprüche 1 bis 10, **dadurch gekennzeichnet, dass** wenigstens einzelne der Platten (51) der Abdeckung (5) einander überlappend angeordnet sind.

13. Hochbeet nach einem der Ansprüche 1 bis 12, **dadurch gekennzeichnet, dass** oberhalb des Rahmens (3) eine Berieselungsanlage (31) vorgesehen ist.

## Claims

1. Raised bed (1), **characterised by** a frame (3) having longitudinal sheets (17) and transverse sheets (19) attached to a framework (7), and by a covering (5) formed of transparent material, the covering (5) consisting of a plurality of sheets (51), **characterised in that** the sheets (51) are secured on the frame (3) by resilient cords (53).

2. Raised bed according to claim 1, **characterised in that** the longitudinal sheets (17) and the transverse sheets (19) are panels having insulating layers, in particular layers made of foamed plastics material.

3. Raised bed according to claim 2, **characterised in that** the longitudinal sheets (17) and the transverse sheets (19) are sandwich panels.

4. Raised bed according to either claim 2 or claim 3, **characterised in that** the panels of the longitudinal sheets (17) and of the transverse sheets (19) comprise lightweight steel components which are protected externally against corrosion and, in particular, are galvanised.

5. Raised bed according to any one of claims 1 to 4, **characterised in that** profiled strips (13) are arranged at the edges of the frame (3) which are the upper edges in the use position, the profiled strips (13) having an inward and upwardly open fold (15).

6. Raised bed according to claim 5, **characterised in that** the covering (5) comprises a closing sheet (57) at one or both transverse end(s) of the frame (3), the closing sheet (57) standing on the upper edge of the transverse sheet (19) with its lower edge in the fold (15) of the profiled strip (13).

7. Raised bed according to either claim 5 or claim 6, **characterised in that** the sheets (51) of the covering (5) are inserted via their edges into the fold (15).

8. Raised bed according to any one of the preceding claims, **characterised in that** the initially planar sheets (51) are attached to the raised bed in a curved manner.

9. Raised bed according to any one of claims 1 to 8, **characterised in that** the cords (53) are fixed via their ends to the sheets (51) and are fitted via their middle part over protrusions (55), in particular hooks.

10. Raised bed according to any one of claims 1 to 9, **characterised in that** the sheets (51) of the covering (5) are curved under bias.

11. Raised bed according to any one of claims 1 to 10, **characterised in that** at least some of the sheets (51) of the covering (5) are arranged at a distance from one another.

12. Raised bed according to any one of claims 1 to 10, **characterised in that** at least some of the sheets (51) of the covering (5) are arranged so as to be overlapping one another.

13. Raised bed according to any one of claims 1 to 12, **characterised in that** an irrigation system (31) is provided above the frame (3).

## Revendications

1. Plate-bande haute (1), **caractérisée par** un cadre (3) comportant des panneaux longitudinaux (17) posés de manière amovible sur un châssis (7) et des panneaux transversaux (19), et par un toit (5) fabriqué à partir d'un matériau translucide, sachant que le toit (5) se compose de plusieurs panneaux (51),
**caractérisée en ce que** les panneaux (51) sont fixés au cadre (3) à l'aide de cordes élastiques (53).

2. Plate-bande haute selon la revendication 1, **caractérisée en ce que** les panneaux longitudinaux (17) et les panneaux transversaux (9) sont des panneaux de lambris comportant des couches isolantes, en particulier des couches fabriquées à partir d'une matière synthétique moussée.

3. Plate-bande haute selon la revendication 2, **caractérisée en ce que** les panneaux longitudinaux (17) et les panneaux transversaux (19) sont des panneaux de lambris sandwich.

4. Plate-bande haute selon la revendication 2 ou 3, **caractérisée en ce que** les panneaux de lambris des panneaux longitudinaux (17) et des panneaux transversaux (19) présentent des éléments de construction légère en acier, protégés à l'extérieur de la corrosion, en particulier zingués.

5. Plate-bande haute selon l'une quelconque des revendications 1 à 4, **caractérisée en ce que** des baguettes profilées (13) sont disposées sur les bords supérieurs du cadre (3) en position d'utilisation, sachant que les baguettes profilées (13) présentent une rainure (15) ouverte vers l'intérieur et vers le haut.

6. Plate-bande haute selon la revendication 5, **caractérisée en ce que** le toit (5) présente au niveau de l'une ou des deux extrémités transversales du cadre (3), un panneau de fermeture (57), sachant que ledit panneau de fermeture (57) se tient debout au niveau du bord supérieur du panneau transversal (19), le bord inférieur dudit panneau de fermeture se trouvant dans la rainure (15) de la baguette profilée (13).

7. Plate-bande haute selon la revendication 5 ou 6, **caractérisée en ce que** les panneaux (51) du toit (5) sont insérés par leurs bords dans la rainure (15).

8. Plate-bande haute selon l'une quelconque des revendications, **caractérisée en ce que** les panneaux (51) initialement plats sont courbés une fois posés sur la plate-bande haute.

9. Plate-bande haute, selon l'une quelconque des revendications 1 à 8, **caractérisée en ce que** les cordes (53) sont fixées par leurs extrémités aux panneaux (51) et sont accrochées par leur partie médiane par l'intermédiaire de parties en saillie (55), en particulier par des crochets.

10. Plate-bande haute selon l'une quelconque des revendications 1 à 9, **caractérisée en ce que** les panneaux (51) du toit (5) sont voûtés moyennant une précontrainte.

11. Plate-bande haute selon l'une quelconque des revendications 1 à 10, **caractérisée en ce qu'**au moins certains des panneaux (51) du toit (5) sont disposés à distance les uns des autres.

12. Plate-bande haute selon l'une quelconque des revendications 1 à 10, **caractérisée en ce qu'**au moins certains des panneaux (51) du toit (5) sont disposés de manière à se chevaucher les uns les autres.

13. Plate-bande haute selon l'une quelconque des revendications 1 à 12, **caractérisée en ce qu'**une installation d'irrigation (31) est prévue au-dessus du cadre (3).
